# EUROPEAN PATENT SPECIFICATION

(11) **EP 2 898 665 B1**
(45) Date of publication and mention of the grant of the patent: **26.12.2018**
(21) Application number: 13762356.7
(22) Date of filing: 04.09.2013
(51) Int. Cl.: H04N 5/232

(54) **PREVENTING MOTION ARTIFACTS BY INTELLIGENTLY DISABLING VIDEO STABILIZATION**
VERHINDERUNG VON BEWEGUNGSARTEFAKTEN DURCH INTELLIGENTE DEAKTIVIERUNG EINER VIDEOSTABILISIERUNG
PRÉVENTION DES ARTÉFACTS DE MOUVEMENT PAR LA DÉSACTIVATION INTELLIGENTE DE LA STABILISATION VIDÉO

(30) Priority: 24.09.2012 US 201213625347
(43) Date of publication of application: 29.07.2015
(73) Proprietor: Google Technology Holdings LLC, Mountain View, CA 94043 (US)
(72) Inventor: PETRESCU, Doina, Vernon Hills, Illinois 60061 (US); RYAN, Bill, Libertyville, Illinois 60048 (US)
(74) Representative: Openshaw & Co.
(86) International application number: PCT/US2013/057907
(87) International publication number: WO 2014/046868

(56) References cited:
- EP-A1- 1 998 554
- US-A1- 2007 248 166
- US-A1- 2011 234 825
- US-A1- 2012 069 203
- US-B1- 6 734 901
- US-B1- 6 734 902
- US-B2- 7 609 293

## Description

### TECHNICAL FIELD

The present disclosure is related generally to digital-image capture and, more particularly, to digital video stabilization.

### BACKGROUND

Digital video-capture devices, such as still and video cameras, are becoming more commonplace. Once available only on high-end professional cameras, today such digital devices are found in smartphones, tablet computers, and other personal electronics devices. Digital cameras are small and relatively inexpensive to manufacture and are thus popular accessories in today's personal electronics devices.

US 2012/069203 describes a method of generating a stabilized video sequence, including receiving an input video sequence captured by an image capture device. The input video sequence includes a plurality of pairs of successive frames. Motion sensor data indicative of motion of the image capture device while the input video sequence was being captured is received. A set of matching features for each pair of successive frames is identified. Global motion features are identified in each set of matching features and qualified based on the motion sensor data. The global motion features are indicative of movement of the image capture device. A stabilized video sequence is generated based on the input video sequence and the identified global motion features.

US 2011/234825 describes a control system for video processes that selectively control the operation of motion stabilization processes. Motion sensor data indicative of motion of a mobile device may be received and processed. A determination may be made by comparing processed motion sensor data to a threshold. Based on the determination, motion stabilization may be suspended on select portions of a captured video sequence.

US 2006/061658 describes a system for stabilising video signals generated by a video camera which may be mounted in an unstable manner includes a digital processing means for manipulation of each incoming image that attempts to overlay features of the current image onto similar features of a previous image. A mask is used that prevents parts of the image that are likely to cause errors in the overlaying process from being used in the calculation of the required movement to be applied to the image. The mask may include areas where small movements of the image have been detected, and many also include areas where image anomalies including excess noise have been detected.

US 6,734,902 describes a vibration correcting device comprises a first vibration correcting amount output unit for obtaining and outputting a vibration correcting amount from the amount of vibration of the apparatus, a second vibration correcting amount output unit for obtaining and outputting a vibration correcting amount from the amount of vibration in a picked-up image obtained by picking up an object image with image pickup unit through an optical system, a correction unit for correcting the vibration in the picked-up image based on the output of the first and second vibration correcting amount output unit, and a control unit for controlling the outputs of the first and second vibration correcting amount output unit based on the outputs thereof.

US 6,734,901 describes a vibration correction apparatus having a motion vector detection circuit for detecting a motion vector signal at a predetermined sampling period, a signal processing circuit for calculating a correction target value in accordance with the motion vector signal detected by the motion vector detection circuit, a correction system for correcting a motion in accordance with the correction target value, and a control circuit for generating a new correction target value through interpolation of the correction target value, shortening a correction period of correction by the correction system shorter than a sampling period of the motion vector, and making the period of correction by the correction system variable with each image pickup system.

US 2007/248166 describes a method for reducing motion artifacts in an output image, comprising capturing multiple frames of a scene; determining local motion vectors between each pixel in a current frame and a corresponding pixel in the a previous frame; and performing a temporal filtering operation based on the local motion vectors wherein pixels from a plurality frames are integrated to form the output image.

Because these personal electronics devices are often quite small and light, they can be easily shaken when the user is trying to take a photograph or a movie, and this shaking can produce blurry images. To compensate for shaking, digital video stabilization methods compare captured images frame by frame and apply global motion compensation to remove the frame-to-frame motion and to thus make the captured images less blurry.

### BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:
Figure 1 is an schematic of a representative personal electronics device with a video camera in which the present techniques may be practiced;
Figure 2 is a flowchart of a representative method for disabling video stabilization when a camera is steady;
Figures 3a through 3c are graphs of motion-data measurements made for a camera in different circumstances; and
Figures 4 and 5 are flowcharts of methods for selectively applying video stabilization when a camera may be moving.

### DETAILED DESCRIPTION

Turning to the drawings, wherein like reference numerals refer to like elements, techniques of the present disclosure are illustrated as being implemented in a suitable environment. The following description is based on embodiments of the claims and should not be taken as limiting the claims with regard to alternative embodiments that are not explicitly described herein.

Digital video stabilization is selectively turned off in circumstances where it could actually decrease the quality of a captured video. A video camera includes a motion detector device for directly detecting physical motion of the camera (e.g., a gyroscope, accelerometer, a GPS receiver, or another camera). Motion data from the motion detector are analyzed to see if video stabilization is appropriate. If the motion data indicate that the video camera is stable, for example, then video stabilization is not applied to the video, thus preventing the possibility of introducing "motion artifacts" into the captured video. In another example, motion as detected by the motion detector can be compared with motion as detected by the video-stabilization engine. If the two motions disagree significantly, then the video-stabilization engine is probably responding more strongly to motion in the captured images than to motion of the camera itself, and video stabilization should probably not be applied to the video.

Various embodiments can be implemented in hardware or as executable code running on a microprocessor or a controller of an video-capture system. Where so configured, the executable code can include various modules that determine video stability and physical motion.

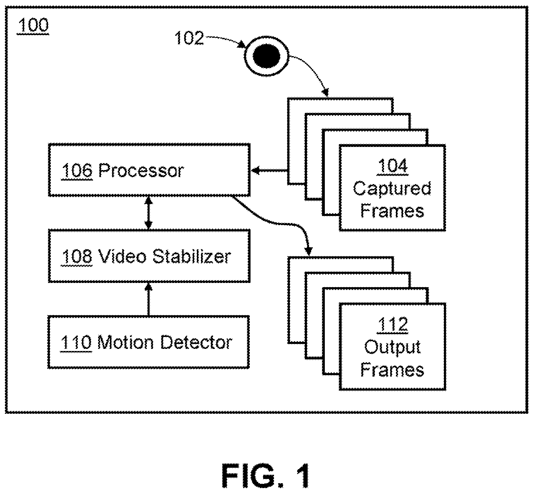

Figure 1 shows a representative personal electronics device 100 that can embody aspects of the present disclosure. The device 100 can be just about any device with a video camera 102 including, for example, a dedicated camera, a mobile telephone, a personal digital assistant, or a tablet computer.

The video camera 102 of Figure 1 represents an entire video-capture device, as known in the art. A typical video-capture device 102 includes an image sensor and a control circuit (represented in Figure 1 by the processor 106, but see the discussion below). The image sensor, which can be any type of image sensor known in the art, such as a CMOS or a CCD sensor, receives light through a lens. The light is reflected off a subject and is then captured by the image sensor to form an image. The captured image is stored as one digital frame 104. Generally speaking, the video camera 102 creates frames of captured images as a constant rate. When displayed to a user at the same rate, the succession of frames is a video clip. As is known in the art, the video-capture device 102 may include other optical, mechanical, and electronic systems (including a variable aperture, lenses, an auto-focus engine, and the like). The personal electronics device 100 can include another video camera (not shown in Figure 1), the possible use of which is discussed below.

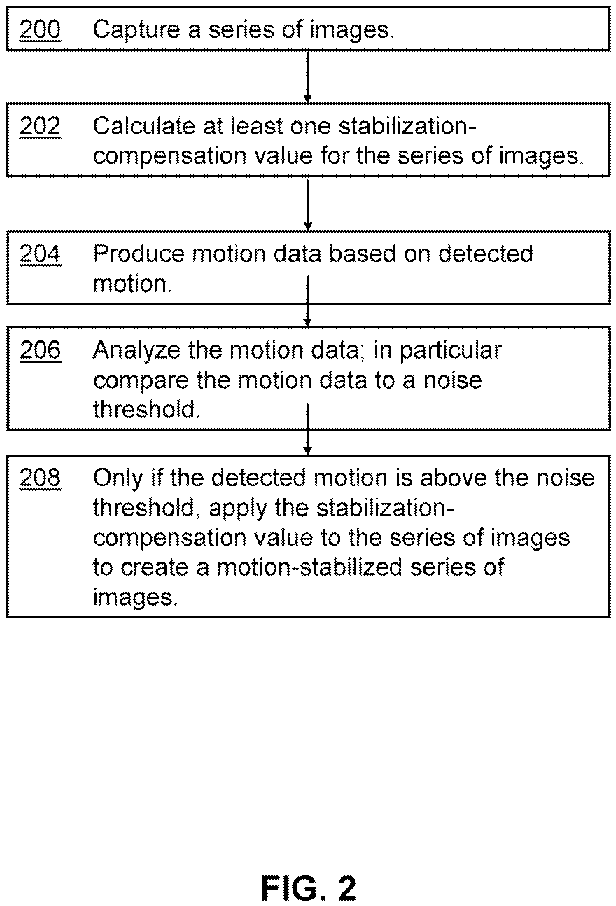

For ease of discussion, it is assumed that the personal electronics device 100 is completely controlled by a software-driven processor 106. In some embodiments, however, a microcontroller, embedded controller, or application-specific controller 106 controls certain aspects of the device 100 including the video stabilizer 108 (also called a video-stabilization engine) and the motion detector 110 as described below in reference to Figures 2, 4, and 5. In some embodiments, control functions are divided among multiple modules within the device 100 including both software-controlled processors and hardwired controllers.

The video-stabilization engine 108, as is well known in the art, reviews the captured frames 104 and attempts to detect motion of the personal electronics device 100. If, for example, a pixel-by-pixel comparison of two successive frames 104 reveals that the second frame is essentially identical to the first but displaced by a small but constant amount to the right, then it is possible that the image being captured has not moved to the right, but instead the device 100 has moved that small distance to the left. This often happens when the hands holding the device 100 shake. Continuing with the above example, in traditional operation, the video-stabilization engine 108 attempts to compensate for this small movement of the device 100 by shifting the image of the second frame back to the left. The motion of the device 100 has been compensated for by moving the image in the succession of captured frames 104, and in the resultant video, which comprises the motion-compensated output frames 112, there are, ideally, no lingering effects of the shaking of the device 100.

(As a side note, in order to shift the captured image to compensate for the slight motion of the personal electronics device 100, the captured frames 104 are actually somewhat larger than the video eventually displayed. The captured frames 104 include a small extra border of pixels so that if, for example, the image has shifted to the left and the leftmost pixels have thus disappeared off the edge of the normal image, these leftmost pixels are still captured in the left border and can be used when the image is moved back to the right to compensate for the motion. This is all well known in the art.)

The motion detector module 110 directly detects physical motion of the personal electronics device 100. Various known hardware implementations are possible here. A three-axis accelerometer can report movement, as can a gyroscope, or a GPS receiver. In some embodiments, the motion detector module 110 is based on an image sensor (that is, an image sensor other than the video camera 102, e.g., a second camera), and it indirectly calculates motion based on perceived motion.

Generally speaking, the personal electronics device 100 includes other components such as a screen for viewing captured images and video, an interface for receiving user commands and for displaying status information, memory for storing controller software and captured frames, and a communications module for sending and receiving information. Because these components are well known in the art and are not of particular concern for the present discussion, they need not be discussed further.

Figure 2 shows a first representative method usable by the personal electronics device 100 of Figure 1. In step 200, the video-capture engine (or camera) 102 captures and stores a succession of image frames 104.

(Note that for ease of discussion, the representative methods of Figures 2, 4, and 5 are illustrated and discussed sequentially. In many embodiments, various steps are performed concurrently, possibly by different processors and controllers working, at least to some extent, independently.)

In step 202, well known techniques of video-stabilization analysis are applied to the succession of captured frames 104. In one embodiment, successive frames are compared pixel-by-pixel by the video-stabilization engine 108. If the analysis decides that the differences between frames are best explained, at least in part, by motion of the personal electronics device 100, then one or more stabilization-compensation values are calculated. In some well known embodiments of video stabilization, a calculated stabilization-compensation value minimizes a sum of "pixel-error" differences if it were applied to the second of two successive captured frames 104. For side-to-side motion, for example, a stabilization-compensation value could be a vector whose scalar value is the number of pixels that the detected motion represents and therefore the number of pixels to shift the second image to match (at least approximately) the first image to compensate for motion of the device 100. In a general case, the analysis can detect motion in all three spatial dimensions as well as rotations. (Note that in step 202, the stabilization-compensation values are calculated but are not applied to the captured frames 104.)

In many embodiments, the motion detector 110 constantly produces motion data that represent the detected motions of the personal electronics device 100. In other embodiments, motion data are only produced if motion is detected (i.e., no updated motion data mean no detected motion).

In any case, the current motion data from step 204 are analyzed in step 206. Specifically, the currently detected motion data are compared against a noise threshold value. Most motion detectors 110 known in the art produce some statistically random motion data even when the personal electronics device 100 is completely at rest. Laboratory tests can be run for a particular motion detector 110 by locking it in place and then reading its motion-data output. Viewing the output generally clearly reveals the noise threshold of the motion detector 110. (Of course, statistical techniques more sophisticated than eyeballing a graph can be used to characterize the noise threshold.)

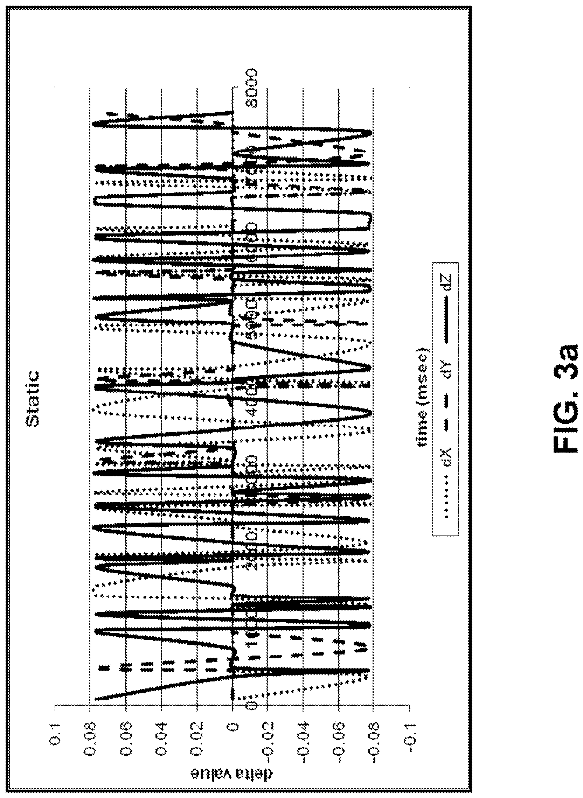

Figure 3a shows the results of an actual test of a motion detector 110 that was held completely static. The graph of Figure 3a shows the motion data (in three dimensions) produced in this static test case. The graph shows very frequent motion events, all of small amplitude. This is characteristic of detector noise. For this particular motion detector 110, a review of the graph reveals a noise threshold of plus or minus 0.08. (The actual value of the noise threshold for a particular motion detector 110 is of less importance than the presence of a well defined threshold. Of course, lower threshold values are generally better, but achieving a very low threshold may involve production costs that far outweigh any added benefits.)

If the motion data produced in step 204 are below the experimentally derived noise threshold of the motion detector 110, then the personal electronics device 100 is most likely at rest. This is the case even if the video-stabilization engine 108 produces a non-zero stabilization-compensation value in step 202. That non-zero value is most likely to be simply incorrect. Therefore, the method of Figure 2 concludes in step 208 by only applying the stabilization-compensation value of step 202 to the captured frames 104 if the motion data produced in step 204 are above the noise threshold of the motion detector 110. Otherwise, the device 100 is static, and the stabilization-compensation value is simply ignored.

(The question can be asked: Why would a properly functioning video-stabilization engine 108 produce a non-zero stabilization-compensation value when the personal electronics device 100 is completely static? The answer is based on the realization that the video-stabilization engine 108 does not measure motion directly but only infers motion by comparing successive captured frames 104. That analysis is "fooled" when, to give just one example, more than half of the captured image is actually moving smoothly and steadily across the frame (e.g., when a large object near the front of the scene is moving from right to left). In this case, most embodiments of the video-stabilization engine 108 believe that it is the device 100 that is moving rather than the majority of image being captured. Thus, it produces a non-zero stabilization compensation value when it should, in an ideal world, produce a zero value. If that non-zero value were applied to the captured frames 104 to compensate for the non-existent motion of the static device 100 (that is, if the method of Figure 2 were not applied), then the resulting output video 112 would include annoying "motion artifacts." The method of Figure 2 prevents these artifacts.)

Note: Performing step 202 consumes power and resources within the personal electronics device 100 even when the stabilization-compensation values are eventually discarded in step 208 because the device 100 is static. Thus, in some embodiments, step 202 is only performed if the analysis of step 206 reveals that the device 100 may actually be moving. In other embodiments, step 202 is always performed, but the results of that step are only used when they are appropriate.

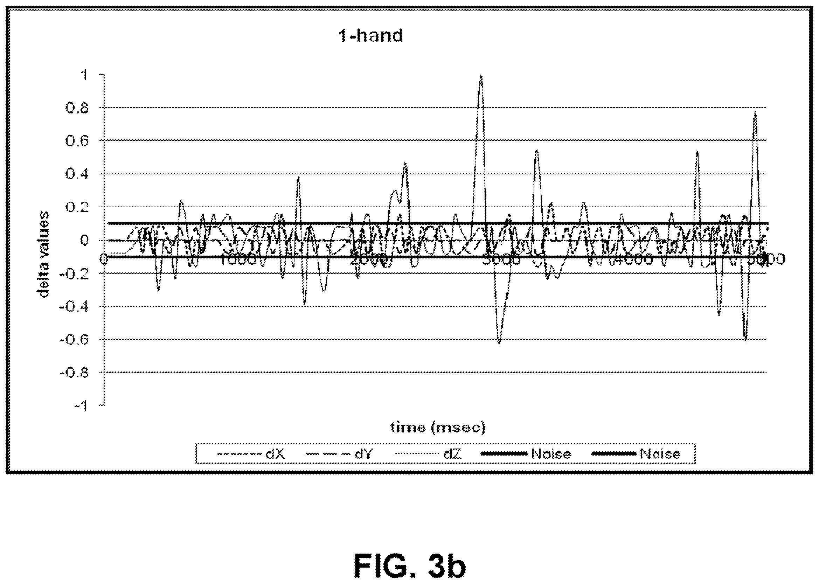

Compare Figure 3a with Figure 3b. (The bold horizontal bars at about plus and minus 0.1 of Figure 3b correspond to the noise threshold measured in Figure 3a.) The motion data of Figure 3b were collected while the personal electronics device 100 was held in one hand. Figure 3b shows very frequent motion events, many of which have amplitudes that far exceed the noise threshold. In this case, video stabilization would be very useful, so step 208 of Figure 2 allows the stabilization-compensation values to be applied to the captured frames 104 to create the output frames 112. (Techniques for applying stabilization-compensation values to video are well known in the art.)

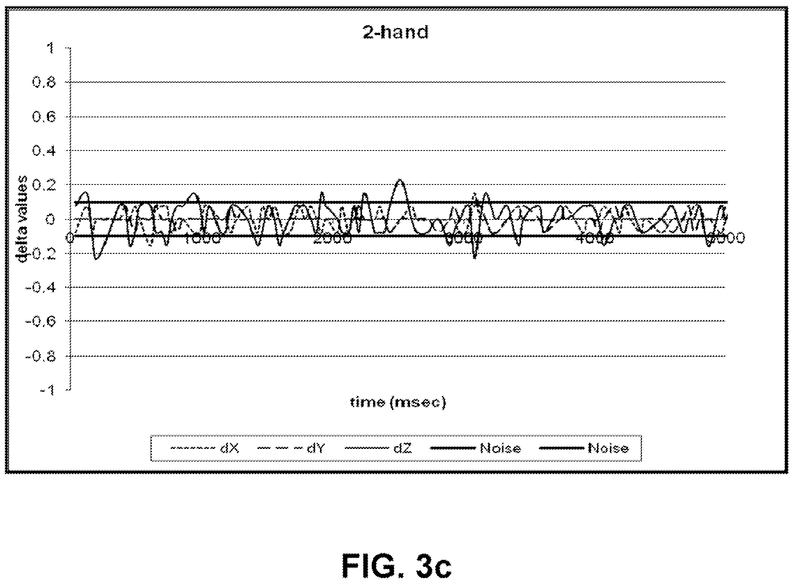

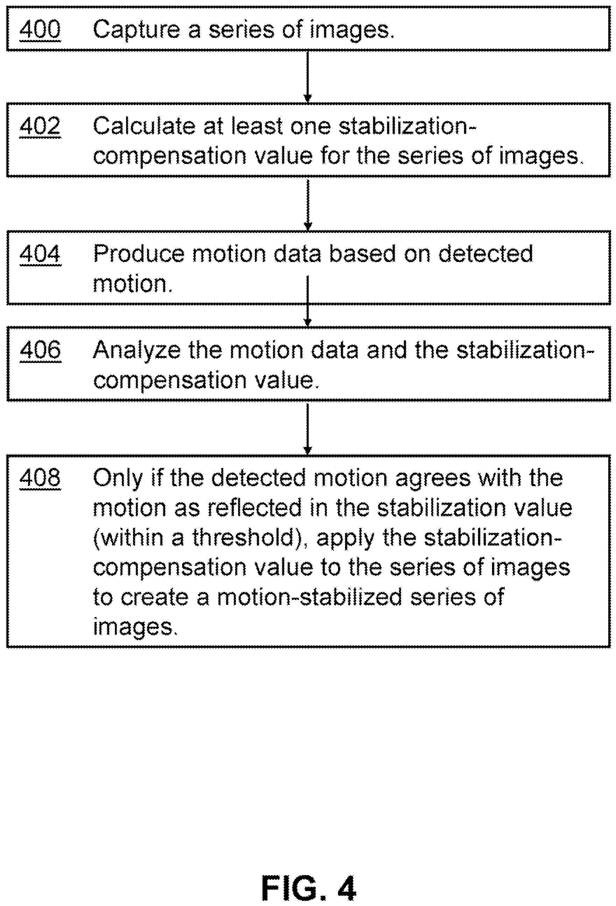

The data for Figure 3c were taken when the personal electronics device 100 was held in two hands. Comparing the amplitudes and the frequency of the motion events in this figure with those of Figure 3b, it is clear that a two-hand grip makes for a much more stable device 100. However, the motion amplitudes in Figure 3c do still sometimes exceed the noise threshold, though usually by less than twice the threshold value. A strict application of the method of Figure 2 to this situation would allow the stabilization-compensation values to be applied to the captured frames 104. However, this is a borderline case, and more data would be useful to make the best decision about using video stabilization. Figure 4, discussed below, presents one way to do this.

Figure 4 shows a second representative method usable by the personal electronics device 100 of Figure 1. The method of Figure 4 begins in a fashion similar to the method of Figure 2. Image frames 104 are captured by the camera 102 (step 400). From the captured frames 104, the video stabilization engine 108 calculates one or more stabilization-compensation values (step 402). Meanwhile, the motion detector 110 produces motion data (step 404).

In step 406, the method of Figure 4 diverges from that of Figure 2. Here, the motion data produced by the motion detector 110 are compared against the stabilization-compensation values calculated by the video stabilization engine 108. In high-level terms, this means that two independently derived values for the current motion of the personal electronics device 100 are compared. If the motion detector 110 agrees (within a motion-difference threshold) with the video-stabilization engine 108 as to how, and how much, the device 100 is currently moving, then their agreed upon value is most likely correct. (Note that, as mentioned above, the motion detector 110 may be implemented as a second video camera, such as a front-facing camera on a laptop computer. In this case, step 406 compares the stabilization-compensation values from the two cameras. If the value agree within the motion-difference threshold, then their agreed motion value is most likely to be correct.) In this case, step 408 applies the stabilization-compensation value to the captured frames 104 to create the output frames 112. If the two motion values disagree, then the video-stabilization engine 108 is probably being fooled, so its stabilization-compensation values cannot be relied upon and are discarded.

Laboratory tests of the personal electronics device 100 can be used to set the value of the motion-difference threshold. In some cases, the noise threshold derived for the motion detector 110 when the device 100 is held static (see Figure 3a and the accompanying discussion) may be used for the motion-difference threshold. It is also conceivable that laboratory testing can find, for some hardware embodiments, an optimal motion-difference threshold that is different from the noise threshold. Different hardware embodiments can lead to different results.

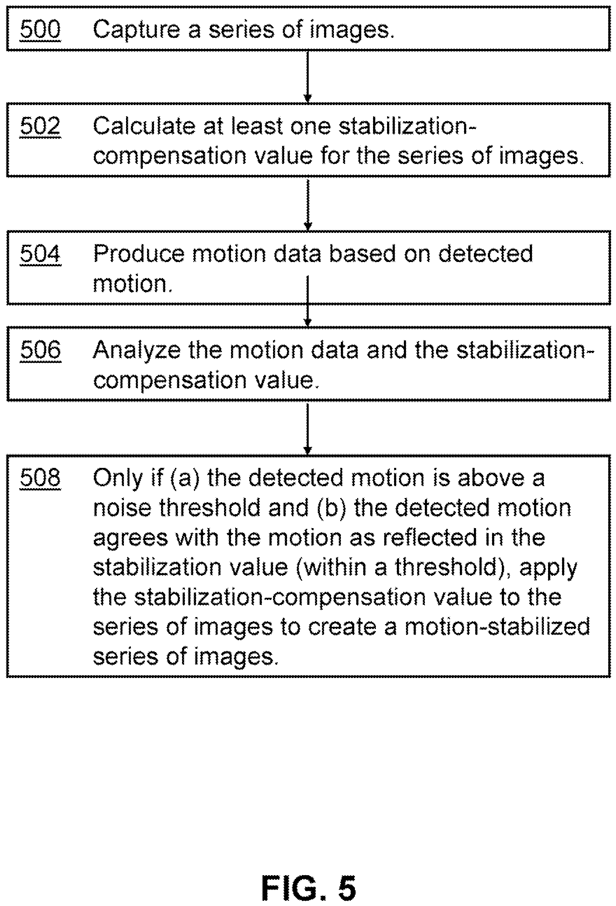

Finally, Figure 5 shows a third representative method usable by the personal electronics device 100 of Figure 1. This method combines aspects of the methods of Figures 2 and 4. As in those methods, image frames 104 are captured by the camera 102 (step 500). From the captured frames 104, the video stabilization engine 108 calculates one or more stabilization-compensation values (step 502). Meanwhile, the motion detector 110 produces motion data (step 504). As in step 406 of Figure 4, in step 506 the motion data produced by the motion detector 110 are compared against the stabilization-compensation values calculated by the video stabilization engine 108.

Step 508 applies both the test of step 208 of Figure 2 and the test of step 408 of Figure 4. Thus, only if the personal electronics device 100 is not static (that is, if the motion data produced in step 504 are above the noise threshold of the motion detector 110), and if the motion detector 110 agrees (within the motion-difference threshold) with the video-stabilization engine 108 as to how, and how much, the device 100 is currently moving, then the stabilization-compensation values are applied to the captured frames 104 to create the output frames 112. Otherwise, the video-stabilization engine 108 is probably being fooled, so its stabilization-compensation values cannot be relied upon and are discarded.

The scope of the invention is defined by the appended claims.

## Claims

1. A method, performed on a personal electronics device (100) comprising a camera (102), a digital video stabilizer (108), and a motion detector (110), the method comprising:
producing (200), by the camera (102), a series of images (104);
calculating (202), by the digital video stabilizer (108), a stabilization-compensation value associated with the series of images (104);
producing (204), by the motion detector (110), motion data;
analyzing (206) the motion data; and
only if (208) the analyzing reveals that motion detected by the motion detector (110) is above a noise threshold of the motion detector, then applying (208) the stabilization-compensation value to the series of images (104),
wherein calculating the noise threshold includes measuring motion data produced by the motion detector (110) while the personal electronics device (100) is in a static position.

2. The method of claim 1 wherein the personal electronics device is selected from the group consisting of: a camera, a mobile telephone, a personal digital assistant, and a tablet computer.

3. The method of claim 1 wherein the motion detector (110) comprises an element selected from the group consisting of: a gyroscope, an accelerometer, a GPS receiver, and an image sensor.

4. The method of claim 1 wherein calculating (202) a stabilization-compensation value comprises comparing images in the series of images and minimizing a sum of pixel-error differences between the compared images.

5. The method of claim 1 wherein the stabilization-compensation value is selected from the group consisting of: a linear offset and a rotation.

6. The method of claim 1 wherein applying the stabilization-compensation value comprises modifying an image in the series of images, the modifying based, at least in part, on the stabilization-compensation value, and sending the modified image to a video encoder.

7. A personal electronics device (100) comprising:
a camera (102) configured for producing a series of images (104);
a digital video stabilizer (108) configured for calculating (202) a stabilization-compensation value associated with the series of images (104);
a motion detector (110) configured for producing (204) motion data; and
a processor (106) connected to the camera (102), to the digital video stabilizer (108), and to the motion detector (110), the processor (106) configured for:
analyzing (206) the motion data; and
only if (208) the analyzing reveals that motion detected by the motion detector (110) is above a noise threshold of the motion detector (110), then applying (208) the stabilization-compensation value to the series of images (104),
wherein calculating the noise threshold includes measuring motion data produced by the motion detector (110) while the personal electronics device (100) is in a static position.

8. The personal electronics device of claim 7 wherein the personal electronics device is selected from the group consisting of: a camera, a mobile telephone, a personal digital assistant, and a tablet computer.

9. The personal electronics device of claim 7 wherein the motion detector comprises an element selected from the group consisting of: a gyroscope, an accelerometer, a GPS receiver, and an image sensor.

10. A method comprising:
calculating a noise threshold of a motion detector (110) based on motion data generated while the motion detector (110) is held in a static position;
capturing, by a camera (102), a plurality of images (104);
calculating, by a digital video stabilizer (108) of the camera (102), a stabilization-compensation value for each of the plurality of images (104) based on a pixel difference between sequential images of the plurality of images (104);
producing, by a motion detector (110) of the camera (102), motion data;
comparing the motion data to the noise threshold; and
upon determining the motion data exceeds the noise threshold, generating a video based on the plurality of images (104) and the stabilization-compensation value for each of the plurality of images.

11. The method of claim 10, further comprising:
upon determining the motion data does not exceed the noise threshold, generating a video based on the plurality of images.

12. The method of claim 10, wherein generating of the video includes ordering the plurality of images based on an order associated with capturing the plurality of images.

13. The method of claim 10, wherein generating of the video includes modifying each of the plurality of images based on a corresponding offset value.

14. The method of claim 10, wherein generating of the video includes rotating each of the plurality of images based by a corresponding offset value.

15. The method of claim 10, further comprising encoding the video for communication over a transmission medium.

## Patentansprüche

1. Verfahren, ausgeführt auf einem persönlichen elektronischen Gerät (100), umfassend eine Kamera (102), einen digitalen Videostabilisator (108) und einen Bewegungsdetektor (110), das Verfahren umfassend:
Erzeugen (200) einer Reihe von Bildern (104) durch die Kamera (102); Berechnen (202) eines der Bildfolge (104) zugeordneten Stabilisierungskompensationswerts durch den digitalen Videostabilisator (108); Erzeugen (204) von Bewegungsdaten durch den Bewegungsdetektor (110);
Analysieren (206) der Bewegungsdaten; und
nur wenn (208) die Analyse ergibt, dass die durch den Bewegungsdetektor (110) erfasste Bewegung über einer Rauschschwelle des Bewegungsdetektors liegt, dann Anwenden (208) des Stabilisierungskompensationswerts auf die Bildserie (104),
wobei das Berechnen des Geräuschschwellenwerts das Messen von Bewegungsdaten beinhaltet, die von dem Bewegungsdetektor (110) erzeugt werden, während sich das persönliche elektronische Gerät (100) in einer statischen Position befindet.

2. Verfahren nach Anspruch 1, wobei das persönliche elektronische Gerät ausgewählt ist aus der Gruppe, bestehend aus: einer Kamera, einem Mobiltelefon, einem persönlichen digitalen Assistenten und einem Tablet-Computer.

3. Verfahren nach Anspruch 1, wobei der Bewegungsdetektor (110) ein Element umfasst, das aus der Gruppe ausgewählt ist, die aus einem Kreisel, einem Beschleunigungssensor, einem GPS-Empfänger und einem Bildsensor besteht.

4. Verfahren nach Anspruch 1, wobei das Berechnen (202) eines Stabilisierungskompensationswerts das Vergleichen von Bildern in der Serie von Bildern und das Minimieren einer Summe von Pixelfehlerunterschieden zwischen den verglichenen Bildern umfasst.

5. Verfahren nach Anspruch 1, wobei der Stabilisierungskompensationswert aus der Gruppe ausgewählt wird, die aus einem linearen Versatz und einer Drehung besteht.

6. Verfahren nach Anspruch 1, wobei das Anwenden des Stabilisierungskompensationswerts das Modifizieren eines Bildes in der Reihe von Bildern umfasst, wobei das Modifizieren zumindest teilweise auf dem Stabilisierungskompensationswert basiert und das modifizierte Bild an einen Videocodierer gesendet wird.

7. Persönliches elektronisches Gerät (100), umfassend:
eine Kamera (102), die zum Erzeugen einer Reihe von Bildern (104) konfiguriert ist;
einen digitalen Videostabilisator (108), der zum Berechnen (202) eines Stabilisierungskompensationswerts konfiguriert ist, der der Bildserie (104) zugeordnet ist;
einen Bewegungsdetektor (110), der zum Erzeugen (204) von Bewegungsdaten konfiguriert ist; und
einen Prozessor (106), der mit der Kamera (102), dem digitalen Videostabilisator (108) und dem Bewegungsdetektor (110) verbunden ist, wobei der Prozessor (106) konfiguriert ist zum:
Analysieren (206) der Bewegungsdaten; und
nur wenn (208) die Analyse ergibt, dass die durch den Bewegungsdetektor (110) erfasste Bewegung über einer Geräuschschwelle des Bewegungsdetektors liegt, dann Anwenden (208) des Stabilisierungskompensationswerts auf die Bildserie (104),
wobei das Berechnen des Geräuschschwellenwerts das Messen von Bewegungsdaten beinhaltet, die von dem Bewegungsdetektor (110) erzeugt werden, während sich das persönliche elektronische Gerät (100) in einer statischen Position befindet.

8. Persönliches elektronisches Gerät nach Anspruch 7, wobei das persönliche elektronische Gerät aus der Gruppe ausgewählt ist, bestehend aus: einer Kamera, einem Mobiltelefon, einem persönlichen digitalen Assistenten und einem Tablet-Computer.

9. Persönliches elektronisches Gerät nach Anspruch 7, wobei der Bewegungsdetektor ein Element umfasst, das aus der Gruppe ausgewählt ist, die aus einem Kreisel, einem Beschleunigungssensor, einem GPS-Empfänger und einem Bildsensor besteht.

10. Verfahren, umfassend:
Berechnen einer Geräuschschwelle eines Bewegungsdetektors (110) basierend auf Bewegungsdaten, die erzeugt werden, während der Bewegungsdetektor (110) in einer statischen Position gehalten wird;
Erfassen einer Vielzahl von Bildern (104) durch eine Kamera (102);
Berechnen, durch einen digitalen Videostabilisator (108) der Kamera (102) eines Stabilisierungskompensationswerts für jedes der Vielzahl von Bildern (104) basierend auf einer Pixeldifferenz zwischen aufeinanderfolgenden Bildern der Vielzahl von Bildern (104); Erzeugen von Bewegungsdaten durch einen Bewegungsdetektor (110) der Kamera (102); Vergleichen der Bewegungsdaten mit der Geräuschschwelle; und
beim Bestimmen, dass die Bewegungsdaten die Rauschschwelle überschreiten, Erzeugen eines Videos basierend auf der Vielzahl von Bildern (104) und dem Stabilisierungskompensationswert für jedes der Vielzahl von Bildern.

11. Verfahren nach Anspruch 10, ferner umfassend:
beim Bestimmen, dass die Bewegungsdaten den Rauschschwellenwert nicht überschreiten, Erzeugen eines Videos basierend auf der Vielzahl von Bildern.

12. Verfahren nach Anspruch 10, wobei das Erzeugen des Videos das Ordnen der Vielzahl von Bildern basierend auf einer Reihenfolge beinhaltet, die mit dem Erfassen der Vielzahl von Bildern verbunden ist.

13. Verfahren nach Anspruch 10, wobei das Erzeugen des Videos das Modifizieren jedes der Vielzahl von Bildern basierend auf einem entsprechenden Versatzwert beinhaltet.

14. Verfahren nach Anspruch 10, wobei das Erzeugen des Videos das Drehen jedes der Vielzahl von Bildern basierend auf einem entsprechenden Versatzwert beinhaltet.

15. Verfahren nach Anspruch 10, ferner umfassend das Kodieren des Videos zur Kommunikation über ein Übertragungsmedium.

## Revendications

1. Procédé, exécuté sur un dispositif électronique personnel (100) comprenant une caméra (102), un stabilisateur vidéo numérique (108), et un détecteur de mouvement (110), le procédé consistant à :
la production (200), par la caméra (102), d'une série d'images (104) ; le calcul (202), par le stabilisateur vidéo numérique (108), d'une valeur de compensation de stabilisation associée à la série d'images (104) ; la production (204), par le détecteur de mouvement (110), de données de mouvement ;
l'analyse (206) des données de mouvement ; et
seulement si (208) l'analyse révèle que le mouvement détecté par le détecteur de mouvement (110) est supérieur à un seuil de bruit du détecteur de mouvement, puis l'application (208) de la valeur de compensation de stabilisation à la série d'images (104),
dans lequel le calcul du seuil de bruit comprend la mesure de données de mouvement produites par le détecteur de mouvement (110) alors que le dispositif électronique personnel (100) est dans une position statique.

2. Procédé selon la revendication 1, dans lequel le dispositif électronique personnel est sélectionné dans le groupe constitué de : une caméra, un téléphone mobile, un assistant numérique personnel, et un ordinateur tablette.

3. Procédé selon la revendication 1, dans lequel le détecteur de mouvement (110) comprend un élément sélectionné dans le groupe constitué de : un gyroscope, un accéléromètre, un récepteur GPS, et un capteur d'image.

4. Procédé selon la revendication 1, dans lequel le calcul (202) d'une valeur de compensation de stabilisation comprend la comparaison d'images dans la série d'images et la minimisation d'une somme de différences d'erreur de pixel entre les images comparées.

5. Procédé selon la revendication 1, dans lequel la valeur de compensation de stabilisation est sélectionnée dans le groupe constitué de : un décalage linéaire et une rotation.

6. Procédé selon la revendication 1, dans lequel l'application de la valeur de compensation de stabilisation comprend la modification d'une image dans la série d'images, la modification étant basée, au moins en partie, sur la valeur de compensation de stabilisation, et l'envoi de l'image modifiée à un codeur vidéo.

7. Dispositif électronique personnel (100) comprenant :
une caméra (102) configurée pour la production d'une série d'images (104) ;
un stabilisateur vidéo numérique (108) configuré pour le calcul (202) d'une valeur de compensation de stabilisation associée à la série d'images (104) ;
un détecteur de mouvement (110) configuré pour la production (204) de données de mouvement ; et
un processeur (106) connecté à la caméra (102), au stabilisateur vidéo numérique (108), et au détecteur de mouvement (110), le processeur (106) étant configuré pour :
l'analyse (206) des données de mouvement ; et
seulement si (208) l'analyse révèle que le mouvement détecté par le détecteur de mouvement (110) est supérieur à un seuil de bruit du détecteur de mouvement, puis l'application (208) de la valeur de compensation de stabilisation à la série d'images (104),
dans lequel le calcul du seuil de bruit comprend la mesure de données de mouvement produites par le détecteur de mouvement (110) alors que le dispositif électronique personnel (100) est dans une position statique.

8. Dispositif électronique personnel selon la revendication 7, dans lequel le dispositif électronique personnel est sélectionné dans le groupe constitué de : une caméra, un téléphone mobile, un assistant numérique personnel et un ordinateur tablette.

9. Procédé selon la revendication 7, dans lequel le détecteur de mouvement comprend un élément sélectionné dans le groupe constitué de : un gyroscope, un accéléromètre, un récepteur GPS, et un capteur d'image.

10. Procédé comprenant :
le calcul d'un seuil de bruit d'un détecteur de mouvement (110) sur base de données de mouvement générées pendant que le détecteur de mouvement (110) est maintenu dans une position statique ;
la capture, par une caméra (102), d'une pluralité d'images (104) ;
le calcul, par un stabilisateur vidéo numérique (108) de la caméra (102), d'une valeur de compensation de stabilisation pour chacune de la pluralité d'images (104) sur base d'une différence de pixel entre des images séquentielles de la pluralité d'images (104) ; la production, par un détecteur de mouvement (110) de la caméra (102), de données de mouvement; la comparaison des données de mouvement avec le seuil de bruit ; et
lors de la détermination que les données de mouvement dépassent le seuil de bruit, la génération d'une vidéo sur base de la pluralité d'images (104) et de la valeur de compensation de stabilisation pour chacune de la pluralité d'images.

11. Procédé selon la revendication 10, comprenant en outre : lors de la détermination que les données de mouvement ne dépassent pas le seuil de bruit, la génération d'une vidéo sur base de la pluralité d'images.

12. Procédé selon la revendication 10, dans lequel la génération de la vidéo comprend la mise en ordre de la pluralité d'images sur base d'un ordre associé à la capture de la pluralité d'images.

13. Procédé selon la revendication 10, dans lequel la génération de la vidéo comprend la modification de chacune de la pluralité d'images sur base d'une valeur de décalage correspondante.

14. Procédé selon la revendication 10, dans lequel la génération de la vidéo comprend la rotation de chacune de la pluralité d'images sur base d'une valeur de décalage correspondante.

15. Procédé selon la revendication 10, comprenant en outre le codage de la vidéo pour une communication sur un support de transmission.
